# EUROPÄISCHE PATENTSCHRIFT

(11) **EP 3 840 969 B1**
(45) Veröffentlichungstag und Bekanntmachung des Hinweises auf die Patenterteilung: **27.04.2022**
(21) Anmeldenummer: 19759314.8
(22) Anmeldetag: 20.08.2019
(51) Int. Cl.: B60H 1/22, F23L 17/04

(54) **BEWOHNBARES FAHRZEUG MIT EINER ENDSEITIGEN LEITUNGSANORDNUNG FÜR EIN HEIZGERÄT**
VEHICLE FIT FOR HABITATION WITH AN END LINE ASSEMBLY FOR A HEATING DEVICE
VÉHICULE HABITABLE AVEC UN ENSEMBLE DE CONDUITS TERMINALS POUR UN APPAREIL DE CHAUFFAGE

(30) Priorität: 21.08.2018 DE 102018120396
(43) Veröffentlichungstag der Anmeldung: 30.06.2021
(73) Patentinhaber: Truma Gerätetechnik GmbH & Co. KG, 85640 Putzbrunn (DE)
(72) Erfinder: BARTUSEL, Jens, 83026 Rosenheim (DE); JÄGER, Markus, 85635 Höhenkirchen-Siegertsbrunn (DE)
(74) Vertreter: Müller Hoffmann & Partner
(86) Internationale Anmeldenummer: PCT/EP2019/072230
(87) Internationale Veröffentlichungsnummer: WO 2020/038921

(56) Entgegenhaltungen:
- EP-A2- 0 637 719
- GB-A- 2 165 934
- GB-A- 2 165 939

## Beschreibung

Die Erfindung betrifft eine endseitige Leitungsanordnung für ein Heizgerät eines bewohnbaren Fahrzeugs, insbesondere Wohnwagen, Wohnmobil oder Schiff.

Bei der Anordnung von Heizgeräten an bzw. in bewohnbaren Fahrzeugen ist es erforderlich, je nach Typ des verwendeten Heizgeräts, das einen oder mehrere Brenner aufweisen kann, und je nach dessen Unterbringung in einem Teil bzw. Kompartiment des Fahrzeugs, eine sichere Ableitung von Abgasen und eine ausreichende Zuleitung von Verbrennungsluft bereitzustellen. Dabei ist es insbesondere wünschenswert, dass in der Außenhaut des Fahrzeugs bzw. des bewohnbaren Aufbaus möglichst wenige bzw. möglichst kleine Öffnungen vorgesehen werden müssen. Für die Ableitung von Abgasen und für die Zuleitung von Verbrennungsluft sind in bekannten Systemen zwei voneinander getrennte Rohre bzw. Leitungen vorgesehen. Die Anzahl an getrennten Leitungen erhöht sich im Falle eines Heizgeräts, das zwei Brenner (alternative Bezeichung ist Feuerstätte) aufweist, von denen einer für das Erwärmen von Luft und der andere für das Erwärmen von Wasser eingesetzt wird.

Aus der FR 787 389 A, der US 4,621,609 A sowie der EP 1 227 276 A2 sind Heizgeräte mit endseitigen Leitungsanordnungen bekannt.

In der GB 2 165 939 A wird ein Heizgerät mit einer Leitungsanordnung zum Ableiten von Abgasen eines Brenners und zum Zuleiten von Verbrennungsluft zu dem Brenner beschrieben. Die Leitungsanordnung weist dementsprechend einen Abgasrohrabschnitt und einen Verbrennungsluftrohrabschnitt auf.

Aus der EP 0 637 719 A2 ist ein Außenwandabschluss für einen Verbrennungsluft- und Abgaskanal eines mit einem Brennersystem arbeitenden Heizgeräts bekannt.

Die GB 2 165 934 A offenbart eine gasbetriebene Raumheizung, die unterhalb des Bodens eines zu beheizenden Innenraums angeordnet ist.

Der Erfindung liegt die Aufgabe zu Grunde, ein bewohnbares Fahrzeug mit einer endseitigen Leitungsanordnung anzugeben, bei der eine vorschriftsgemäße Ableitung von Abgasen unter Vermeidung von Abgasrückströmungen in eine der anderen Leitungen oder/und von Abgasansammlungen, insbesondere unterhalb des Fahrzeugbodens, ermöglicht ist.

Die Aufgabe wird durch ein bewohnbares Fahrzeug mit den Merkmalen des Anspruchs 1 gelöst. Ausgestaltungen der Erfindung sind in den abhängigen Ansprüchen angegeben.

Dazu wird eine endseitige Leitungsanordnung für ein Heizgerät eines bewohnbaren Fahrzeugs, insbesondere Wohnwagen, Wohnmobil oder Schiff, angegeben, mit
wenigstens einem Abgasrohrabschnitt zum Ableiten von Abgasen eines zugeordneten Brenners des Heizgerätes;
wenigstens einem Verbrennungsluftrohrabschnitt zum Zuleiten von Verbrennungsluft zu einem zugeordneten Brenner des Heizgeräts,
wobei der Abgasrohrabschnitt und der Verbrennungsrohrabschnitt relativ zueinander parallel und unbeweglich in einem Hülsenabschnitt vorgesehen sind, dessen Außenseite die Leitungsanordnung zur Umgebung hin begrenzt.

Die gemeinsame Unterbringung von Abgasrohrabschnitt und Verbrennungsluftrohrabschnitt in einem Hülsenabschnitt ermöglicht eine kompakte Bauweise der Leitungsanordnung. Da der Hülsenabschnitt die Leitungsanordnung zur Umgebung hin begrenzt, ist lediglich eine Öffnung in einer Fahrzeugwand erforderlich, um den Austritt sowohl der Abgasleitung als auch der Verbrennungsluftleitung zu ermöglichen.

Der Hülsenabschnitt kann dabei durch den Verbrennungsluftrohrabschnitt gebildet sein. In diesem Fall bildet der Verbrennungsluftrohrabschnitt die äußere Begrenzung der Leitungsanordnung zur Umgebung hin. Dabei ist der wenigstens eine Abgasrohrabschnitt innerhalb des Verbrennungsluftrohrabschnitts angeordnet. Hierdurch wird eine kompakte Bauweise der Leitungsanordnung erreicht.

Die endseitige Leitungsanordnung kann wenigstens zwei Abgasrohrabschnitte aufweisen, die strömungstechnisch voneinander getrennt sind. Eine derartige Leitungsanordnung kann für ein Heizgerät mit mindestens zwei Brennern (bzw. zwei Feuerstätten) eingesetzt werden, wobei jeder Abgasrohrabschnitt jeweils mit einem zugeordneten Brenner strömungstechnisch verbindbar bzw. verbunden ist. Dabei sind die beiden Abgasrohrabschnitte gemeinsam in dem Hülsenabschnitt oder in dem den Hülsenabschnitt bildenden Verbrennungsluftrohrabschnitt aufgenommen. Auch dies ermöglicht eine kompakte Bauweise der Leitungsanordnung, so dass auch zwei Abgasleitungen zusammen mit einer Verbrennungsluftleitung einfach im Bereich der Außenhaut des Fahrzeugs angeordnet bzw. aus dem Fahrzeug geführt werden können.

Bei der endseitigen Leitungsanordnung kann der Verbrennungsluftrohrabschnitt den Abgasrohrabschnitt bzw. die Abgasrohrabschnitte umgeben, derart, dass der Abgasrohrabschnitt bzw. die Abgasrohrabschnitte von Verbrennungsluft umströmt ist.

Weiter können bei der endseitigen Leitungsanordnung der Abgasrohrabschnitt bzw. die Abgasrohrabschnitte und der Verbrennungsrohrabschnitt konzentrisch zueinander angeordnet sein. Hierdurch kann eine kompakte und einfach anzuschließende Leitungsanordnung bereitgestellt werden. Im Falle einer Leitungsanordnung mit zwei Abgasrohrabschnitten kann beispielsweise ein erster Abgasrohrabschnitt im Querschnitt kreisförmig ausgebildet sein und das Zentrum der konzentrischen Leitungsanordnung bilden. Der zweite Abgasrohrabschnitt kann in einem solchen Falle ringförmig um den ersten Abgasrohrabschnitt angeordnet sein. Schließlich kann bei einer solchen Konstellation der Verbrennungsluftrohrabschnitt ringförmig um den zweiten Abgasrohrabschnitt ausgebildet sein. Dabei kann der Verbrennungsluftrohrabschnitt die Leitungsanordnung nach außen hin begrenzen.

Die Leitungsanordnung umfasst ein Leitungsendstück, das auf seiner dem Heizgerät abgewandten Seite eine Mündung für den Abgasrohrabschnitt bzw. die Abgasrohrabschnitte und den Verbrennungsluftrohrabschnitt bildet. Dabei kann das Leitungsendstück in eine Wand des bewohnbaren Fahrzeugs einsetzbar sein, insbesondere darin befestigbar sein. Alternativ kann ein solches Leitungsendstück auch in einer Wand eines Kompartiments vorgesehen sein, das unterhalb des Bodens des Innenraums, also sogenannt unterflur, angeordnet ist und in dem ein Heizgerät unterflur angeordnet ist.

Die Leitungsanordnung umfasst ein Verlängerungsstück, das wenigstens einen gebogenen Leitungsabschnitt aufweist, der zwischen einem ersten Verlängerungsabschnitt und einem zweiten Verlängerungsabschnitt angeordnet ist, wobei der erste Verlängerungsabschnitt bezogen auf die Strömungsrichtung von Abgas stromaufwärts des gebogenen Leitungsabschnitts angeordnet ist. Ein solches Verlängerungsstück ermöglicht das Ableiten von Abgasen zu einem Bereich, der sich weiter weg von dem Heizgerät befindet. Insbesondere ermöglicht ein solches Verlängerungsstück, dass Abgase, die von einem unterflur angeordneten Heizgerät stammen und unterhalb des Fahrzeugbodens ausgestoßen werden, an einer Stelle abzugeben, die nicht unterflur liegt, vorzugsweise höher liegt als der Fahrzeugboden.

Das Verlängerungsstück kann eine Befestigungseinrichtung aufweisen, derart dass das Verlängerungsstück, insbesondere der zweite Verlängerungsabschnitt, an einer Wand des bewohnbaren Fahrzeugs fixierbar ist. Somit kann das Verlängerungsstück mittels seines Anschlusses im Bereich des Heizgeräts und mittels der Befestigungseinrichtung sicher am Fahrzeug befestigt bzw. gesichert werden.

Das Verlängerungsstück kann einen ersten gebogenen Leitungsabschnitt aufweisen, der zwischen dem ersten Verlängerungsabschnitt und dem zweiten Verlängerungsabschnitt angeordnet ist, und einen zweiten gebogenen Leitungsabschnitt aufweist, der bezogen auf die Strömungsrichtung von Abgas stromabwärts an dem zweiten Verlängerungsabschnitt angeordnet ist. Ferner können der erste Verlängerungsabschnitt und der zweite Verlängerungsabschnitt im Wesentlichen orthogonal zueinander ausgerichtet sein. Hierdurch ist es möglich, dass mittels des Verlängerungsstücks die Abgasleitung von unterflur zu einem Rand des Fahrzeugboden geführt und dann entlang einer Wand des Fahrzeugs nach oben geführt wird.

Die Leitungsanordnung umfasst einen mit dem Heizgerät unmittelbar oder mittelbar verbundenen Leitungsadapter, an dem das Leitungsendstück oder das Verlängerungsstück abnehmbar angebracht ist, insbesondere in der Art einer Steckverbindung. Dabei weist der Leitungsadapter in Bezug auf die Anordnung von Abgasrohrabschnitt(en) und Verbrennungsluftrohrabschnitt eine gleiche Konfiguration auf, wie das anzuschließende Leitungsendstück bzw. Verlängerungsstück. Ein solcher Leitungsadapter kann beispielsweise dazu dienen, einzelne vom Heizgerät abgehende Abgasleitungen bzw. Verbrennungsluftleitungen zusammenzuführen, so dass die einzelnen Leitungen dann mit der endseitigen Leitungsanordnung fluidtechnisch verbunden werden kann

Das Leitungsendstück kann bezogen auf die Strömungsrichtung von Abgas stromabwärts des zweiten Verlängerungsabschnitts an dem Verlängerungsstück anbringbar sein. Anders ausgedrückt kann ein beispielsweise in einer Wandung verwendetes Endstück beispielsweise abgenommen werden und stattdessen das Verlängerungsstück angebracht werden, wobei dann das Endstück auf das freie Ende des Verlängerungsstücks aufsetzbar ist.

Die Erfindung betrifft ferner auch ein Heizungssystem für ein bewohnbares Fahrzeug, insbesondere Wohnwagen, Wohnmobil oder Schiff, mit einem Heizgerät zum Erwärmen von Luft im Innenraum des Fahrzeugs oder/und zum Erwärmen von Wasser, wobei das Heizgerät zum Ableiten von Abgasen eines Brenners oder mehrerer Brenner und zum Zuleiten von Verbrennungsluft zu dem Brenner oder zu den Brennern eine oben beschriebene endseitige Leitungsanordnung aufweist.

Bei dem Heizungssystem kann strömungstechnisch zwischen dem Heizgerät und der endseitigen Leitungsanordnung wenigstens ein flexibler Abgasrohrabschnitt und wenigstens ein flexibler Verbrennungsluftrohrabschnitt angeordnet sein. Dabei kann der flexible Abgasrohrabschnitt oder können mehrere flexible Abgasrohrabschnitte in dem flexiblen Verbrennungsrohrabschnitt aufgenommen sein. Alternativ können der wenigstens eine flexible Abgasrohrabschnitt und der flexible Verbrennungsluftrohrabschnitt als separate bzw. nebeneinander angeordnete Leitungen ausgebildet sein. Wie bereits oben beschrieben worden ist, können solche flexiblen Leitungsabschnitte beispielsweise an einem Leitungsadapter der Leitungsanordnung angeschlossen werden bzw. sein.

Schließlich betrifft die Erfindung auch ein bewohnbares Fahrzeug, insbesondere Wohnwagen, Wohnmobil oder Schiff, mit einem oben beschriebenen Heizungssystem bzw. einer oben beschriebenen Leitungsanordnung.

Bei dem bewohnbaren Fahrzeug kann das Heizgerät in einem vom Innenraum durch eine Abdeckeinrichtung getrennten Kompartiment aufgenommen sein, wobei das Kompartiment als Unterflurkompartiment unterhalb des Bodens des Innenraums ausgebildet ist oder als Überflurkompartiment durch den Innenraum begrenzende Seitenwände ausgebildet ist.

Ferner kann bei dem bewohnbaren Fahrzeug die endseitige Leitungsanordnung, insbesondere deren Verlängerungsstück, bei in dem Unterflurkompartiment angeordnetem Heizgerät vollständig außerhalb des Innenraums des Fahrzeugs angeordnet sein. Alternativ kann bei dem bewohnbaren Fahrzeug die endseitige Leitungsanordnung, insbesondere deren Verlängerungsstück, bei unterhalb des Bodens des Innenraums angeordnetem Heizgerät vollständig außerhalb des Innenraums des Fahrzeugs angeordnet sein. Dabei kann das Verlängerungsstück zusätzlich zum strömungstechnischen Anschluss im Bereich des Unterflurkompartiments mittels einer Befestigungseinrichtung an einer Außenseite einer Seitenwand des Fahrzeugs lösbar fixiert sein.

Nachfolgend wird die Erfindung unter Bezugnahme auf die anliegenden Figuren beispielhaft und nicht einschränkend anhand verschiedener Ausführungsformen genauer beschrieben. Dabei zeigen
- **Fig. 1**: eine schematische und vereinfachte Draufsicht (Fig. 1A) und zugehörige Schnittdarstellung (Fig. 1B) entsprechend der Schnittlinie B-B eines ersten Beispiels eines Leitungsendstücks einer endseitigen Leitungsanordnung;
- **Fig. 2**: eine schematische und vereinfachte Draufsicht (Fig. 2A) und zugehörige Schnittdarstellung (Fig. 2B) entsprechend der Schnittlinie B-B eines zweiten Beispiels eines Leitungsendstücks einer endseitigen Leitungsanordnung;
- **Fig. 3**: eine schematische und vereinfachte Draufsicht (Fig. 3A) und zugehörige Schnittdarstellung (Fig. 3B) entsprechend der Schnittlinie B-B eines dritten Beispiels eines Leitungsendstücks einer endseitigen Leitungsanordnung;
- **Fig. 4**: eine schematische und vereinfachte Draufsicht (Fig. 4A) und zugehörige Schnittdarstellung (Fig. 4B) entsprechend der Schnittlinie B-B eines ersten Beispiels eines Verlängerungsstücks einer endseitigen Leitungsanordnung;
- **Fig. 5**: eine schematische und vereinfachte Draufsicht (Fig. 5A) und zugehörige Schnittdarstellung (Fig. 5B) entsprechend der Schnittlinie B-B eines zweiten Beispiels eines Verlängerungsstücks einer endseitigen Leitungsanordnung;
- **Fig. 6**: eine schematische und vereinfachte Ansicht ein bewohnbares Fahrzeug, an dem beispielhaft ein Leitungsendstück bzw. ein Verlängerungsstück einer endseitigen Leitungsanordnung angeordnet sind;
- **Fig. 7**: in den Teilfiguren A) bis F) schematische Darstellungen möglicher Konfigurationen einer endseitigen Leitungsanordnung.

In allen nachfolgenden Figuren wird eine Strömungsrichtung SA von Abgas durch einen entsprechend bezeichneten Pfeil gekennzeichnet. Die Strömungsrichtung SV von Verbrennungsluft, die aus der Umgebung angesaugt wird, ist der Abgasströmungsrichtung SA entgegengesetzt.

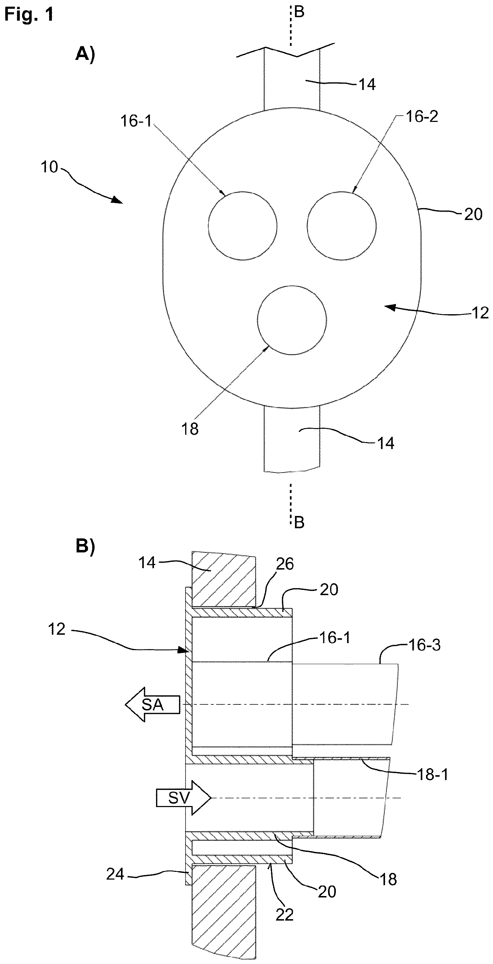

Fig. 1 zeigt in einer schematischen und vereinfachten Form eine endseitige Leitungsanordnung 10 für ein Heizgerät eines bewohnbaren Fahrzeugs. Die nachfolgende Beschreibung bezieht sich sowohl auf die Draufsicht (Fig. 1A), als auch auf die Schnittdarstellung (Fig. 1B). Die Leitungsanordnung 10 weist ein Leitungsendstück 12 auf, das im gezeigten Beispiel in einer Wand 14 angeordnet ist, beispielsweise einer Wand des bewohnbaren Fahrzeugs oder einer Wand eines Kompartiments, in dem das Heizgerät untergebracht ist.

Das Leitungsendstück 12 weist einen ersten Abgasrohrabschnitt 16-1 zum Ableiten von Abgasen auf. Weiter umfasst das Leitungsendstück 12 einen zweiten Abgasrohrabschnitt 16-2. Unterhalb der beiden Abgasrohrabschnitte 16-1, 16-2 ist ein Verbrennungsluftrohrabschnitt 18 angeordnet, der zum Zuleiten von Verbrennungsluft zu einem zugeordneten Brenner des Heizgeräts dient. Die beiden Abgasrohrabschnitt 16-1, 16-2 und der Verbrennungsrohrabschnitt 18 sind dabei relativ zueinander parallel und unbeweglich in einem Hülsenabschnitt 20 vorgesehen. Die Außenseite 22 des Hülsenabschnitts 20 begrenzt die Leitungsanordnung zur Umgebung hin. Das Leitungsendstück 12 ist in diesem Beispiel so ausgebildet, dass es auch eine Blende 24 aufweist, in der die Mündungen der verschiedenen Rohrabschnitte 16-1, 16-2, 18 ausgebildet sind und die dazu dient, eine in der Wand 14 vorgesehene Öffnung 26 abzudecken, in der das Leitungsendstück 12 aufgenommen ist.

Mit dem Leitungsendstück 12 können weitere Abgasrohrabschnitte 16-3 bzw. Verbrennungsrohrabschnitte 18-1 verbunden sein. Diese Leitungsabschnitte 16-3. 18-1 können starr oder flexibel ausgebildet sein. Bevorzugt sind die Rohrabschnitte 16-3 und 18-1 so ausgebildet, dass das Leitungsendstück 12 mit seinen Rohrabschnitten 16-1, 16-2, 18 in einfacher Weise verbunden werden kann, insbesondere durch Ausbildung einer Steckverbindung. Denkbar ist auch, dass flexible Rohrabschnitte 16-3, 18 mittels hier nicht dargestellter Rohrschellen an dem Leitungsendstück 12 angebracht werden.

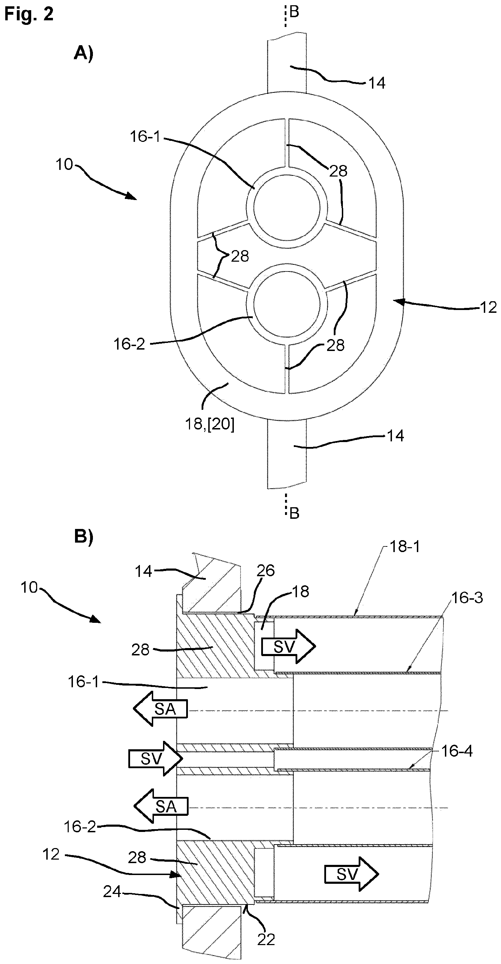

Fig. 2 zeigt in einer schematischen und vereinfachten Form wiederum eine endseitige Leitungsanordnung 10 für ein Heizgerät eines bewohnbaren Fahrzeugs. Die nachfolgende Beschreibung bezieht sich sowohl auf die Draufsicht (Fig. 2A), als auch auf die Schnittdarstellung (Fig. 2B). Die Leitungsanordnung 10 weist ein Leitungsendstück 12 auf, das im gezeigten Beispiel in einer Wand 14 angeordnet ist, beispielsweise einer Wand des bewohnbaren Fahrzeugs oder einer Wand eines Kompartiments, in dem das Heizgerät untergebracht ist.

Das Leitungsendstück 12 weist einen ersten Abgasrohrabschnitt 16-1 zum Ableiten von Abgasen auf. Weiter umfasst das Leitungsendstück 12 einen zweiten Abgasrohrabschnitt 16-2. Die beiden Abgasrohrabschnitte 16-1, 16-2 sind umgeben von einem Verbrennungsluftrohrabschnitt 18, der zum Zuleiten von Verbrennungsluft zu einem zugeordneten Brenner des Heizgeräts dient. Die beiden Abgasrohrabschnitt 16-1, 16-2 und der Verbrennungsrohrabschnitt 18 sind dabei relativ zueinander parallel und unbeweglich vorgesehen.

Im Unterschied zum Beispiel der Fig. 1 bildet der Verbrennungsluftrohrabschnitt 18 den in der Fig. 1 separat gezeigten Hülsenabschnitt 20. Die Außenseite 22 des Verbrennungsluftrohrabschnitts 18 begrenzt die Leitungsanordnung 10 zur Umgebung hin. Das Leitungsendstück 12 ist in diesem Beispiel so ausgebildet, dass es auch eine Blende 24 aufweist, in der die Mündungen der verschiedenen Rohrabschnitte 16-1, 16-2, 18 ausgebildet sind und die dazu dient, eine in der Wand 14 vorgesehene Öffnung 26 abzudecken, in der das Leitungsendstück 12 aufgenommen ist.

Die beiden Abgasrohrabschnitte 16-1, 16-2 sind mittels strebenartiger Elemente 28 mit dem umgebenden Verbrennungsluftrohrabschnitt 18 verbunden. Im gezeigten Beispiel ist jeder Abgasrohrabschnitt 16-1,16-2 mittels dreier Streben 28 an dem Verbrennungsluftrohrabschnitt 18 abgestützt. Mit dem Leitungsendstück 12 können weitere Abgasrohrabschnitte 16-3, 16-4 bzw. Verbrennungsrohrabschnitte 18-1 verbunden sein. Diese Leitungsabschnitte 16-3, 16-4, 18-1 können starr oder flexibel ausgebildet sein. Bevorzugt sind die Rohrabschnitte 16-3, 16-4, und 18-1 so ausgebildet, dass das Leitungsendstück 12 mit seinen Rohrabschnitten 16-1, 16-2, 18 in einfacher Weise verbunden werden kann, insbesondere durch Ausbildung einer Steckverbindung. Denkbar ist auch, dass flexible Rohrabschnitte 16-3, 16-4, 18-1 mittels hier nicht dargestellter Rohrschellen an dem Leitungsendstück 12 angebracht werden.

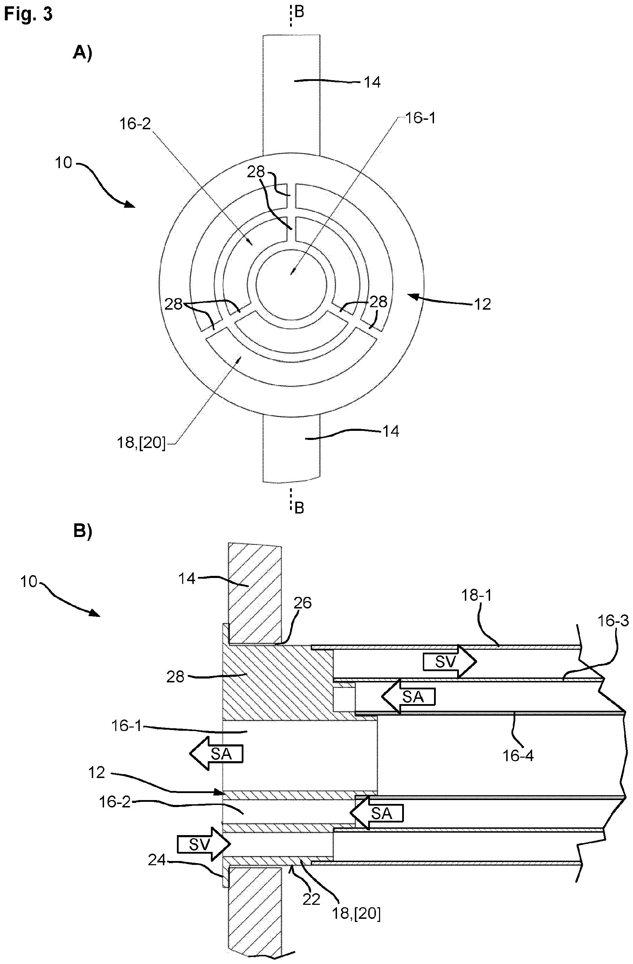

Fig. 3 zeigt in einer schematischen und vereinfachten Form wiederum eine endseitige Leitungsanordnung 10 für ein Heizgerät eines bewohnbaren Fahrzeugs. Die nachfolgende Beschreibung bezieht sich sowohl auf die Draufsicht (Fig. 3A), als auch auf die Schnittdarstellung (Fig. 3B). Die Leitungsanordnung 10 weist ein Leitungsendstück 12 auf, das im gezeigten Beispiel in einer Wand 14 angeordnet ist, beispielsweise einer Wand des bewohnbaren Fahrzeugs oder einer Wand eines Kompartiments, in dem das Heizgerät untergebracht ist.

Das Leitungsendstück 12 weist einen ersten Abgasrohrabschnitt 16-1 zum Ableiten von Abgasen auf. Weiter umfasst das Leitungsendstück 12 einen zweiten Abgasrohrabschnitt 16-2. Die beiden Abgasrohrabschnitte 16-1, 16-2 sind umgeben von einem Verbrennungsluftrohrabschnitt 18, der zum Zuleiten von Verbrennungsluft zu einem zugeordneten Brenner des Heizgeräts dient. Die beiden Abgasrohrabschnitt 16-1, 16-2 und der Verbrennungsrohrabschnitt 18 sind dabei relativ zueinander parallel und unbeweglich vorgesehen. In diesem Beispiel sind die Abgasrohrabschnitte 16-1, 16-2 und der Verbrennungsluftrohrabschnitt 18 konzentrisch zueinander angeordnet. Dabei der erste Abgasrohrabschnitt 16-1 einen kreisförmigen Querschnitt auf. Der zweite Abgasrohrabschnitt 16-2 ist im Querschnitt ringförmig um den ersten Abgasrohrabschnitt 16-1 angeordnet. Der Verbrennungsluftrohrabschnitt 18 ist im Querschnitt ringförmig um den zweiten Abgasrohrabschnitt 16-2 angeordnet.

Wie im Beispiel der Fig. 2 (und im Unterschied zum Beispiel der Fig. 1) bildet der Verbrennungsluftrohrabschnitt 18 den in der Fig. 1 separat gezeigten Hülsenabschnitt 20. Die Außenseite 22 des Verbrennungsluftrohrabschnitts 18 begrenzt die Leitungsanordnung 10 zur Umgebung hin. Das Leitungsendstück 12 ist in diesem Beispiel so ausgebildet, dass es auch eine Blende 24 aufweist, in der die Mündungen der verschiedenen Rohrabschnitte 16-1, 16-2, 18 ausgebildet sind und die dazu dient, eine in der Wand 14 vorgesehene Öffnung 26 abzudecken, in der das Leitungsendstück 12 aufgenommen ist.

Die beiden Abgasrohrabschnitte 16-1, 16-2 sind mittels strebenartiger Elemente 28 mit dem umgebenden Verbrennungsluftrohrabschnitt 18 bzw. untereinander verbunden. Im gezeigten Beispiel ist der erste Abgasrohrabschnitt 16-1 mittels dreier Streben 28 an dem zweiten Abgasrohrabschnitt 16-2 abgestützt. Der zweite Abgasrohrabschnitt 16-2 ist wiederum mittels dreier Streben 28 an dem Verbrennungsluftrohrabschnitt 18 abgestützt. Mit dem Leitungsendstück 12 können weitere Abgasrohrabschnitte 16-3, 16-4 bzw. Verbrennungsrohrabschnitte 18-1 verbunden sein. Diese Leitungsabschnitte 16-3, 16-4, 18-1 können starr oder flexibel ausgebildet sein. Bevorzugt sind die Rohrabschnitte 16-3, 16-4, und 18-1 so ausgebildet, dass das Leitungsendstück 12 mit seinen Rohrabschnitten 16-1, 16-2, 18 in einfacher Weise verbunden werden kann, insbesondere durch Ausbildung einer Steckverbindung. Denkbar ist auch, dass flexible Rohrabschnitte 16-3, 16-4, 18-1 mittels hier nicht dargestellter Rohrschellen an dem Leitungsendstück 12 angebracht werden.

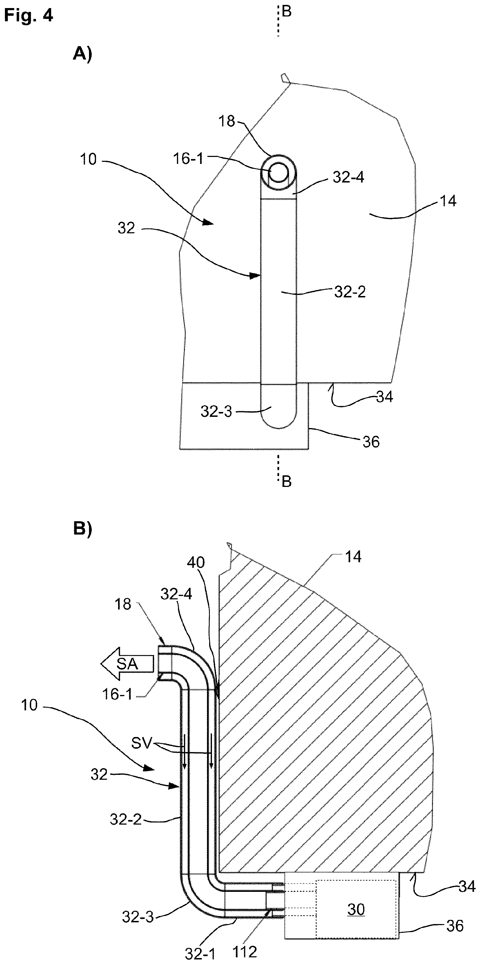

Fig. 4 zeigt in einer schematischen und vereinfachten Form wiederum eine endseitige Leitungsanordnung 10 für ein Heizgerät 30 (gestrichelt angedeutet) eines bewohnbaren Fahrzeugs. Die nachfolgende Beschreibung bezieht sich sowohl auf die Draufsicht (Fig. 4A), als auch auf die Schnittdarstellung (Fig. 4B). Die Leitungsanordnung 10 weist ein Verlängerungsstück 32 auf, das im gezeigten Beispiel entlang einer Wand 14 und einer Unterseite 34 angeordnet ist, beispielsweise einer Wand und einer Unterseite des bewohnbaren Fahrzeugs.

Das Verlängerungsstück 32 weist einen ersten Abgasrohrabschnitt 16-1 zum Ableiten von Abgasen auf. Der Abgasrohrabschnitt 16-1 ist umgeben von einem Verbrennungsluftrohrabschnitt 18, der zum Zuleiten von Verbrennungsluft zu einem zugeordneten Brenner des Heizgeräts 30 dient. Der Abgasrohrabschnitt 16-1 und der Verbrennungsrohrabschnitt 18 sind dabei relativ zueinander parallel und unbeweglich vorgesehen. In diesem Beispiel sind der Abgasrohrabschnitt 16-1 und der Verbrennungsluftrohrabschnitt 18 konzentrisch zueinander angeordnet. Dabei der erste Abgasrohrabschnitt 16-1 einen kreisförmigen Querschnitt auf. Der Verbrennungsluftrohrabschnitt 18 ist im Querschnitt ringförmig um den ersten Abgasrohrabschnitt 16-1 angeordnet.

In diesem Beispiel ist das angedeutete Heizgerät 30 unterflur in einem Kompartiment 36 aufgenommen. In einer Seitenwand 38 des Kompartiments 36 ist eine verglichen mit den Figuren 1 bis 3 modifiziertes Leitungsendstück 112. Das modifizierte Leitungsendstück 112 bildet üblicherweise das freie Ende der endseitigen Leitungsanordnung 10, so dass Abgase unterflur, also unter dem Boden des Fahrzeugs bzw. des bewohnbaren Fahrzeugaufbaus ausgestoßen werden und entsprechend auch Verbrennungsluft unterflur angesaugt wird. In einer alternativen - nicht dargestellten - Ausführung ist das Heizgerät 30 so ausgeführt, dass es selbst und daher frei von einem Kompartiment unterflur angebracht ist.

Unter bestimmten Umständen kann es wünschenswert sein, dass das das Abgas nicht unterflur ausströmt, sondern an einer anderen, insbesondere nicht unterflur liegenden Stelle, die vorzugsweise auch höher liegt als das modifizierte Leitungsendstück 112. Hierzu kann das Verlängerungsstück 32 optional eingesetzt werden. Dabei ist vorgesehen, dass das Verlängerungsstück bei Bedarf mit dem modifizierten Leitungsendstück 112 verbunden werden kann.

Das Verlängerungsstück 32 weist im vorliegenden Beispiel einen ersten Verlängerungsabschnitt 32-1 und einen zweiten Verlängerungsabschnitt 32-2 auf. Die beiden Verlängerungsabschnitte 32-1, 32-2 sind mittels eines gebogenen Leitungsabschnitts 32-3 miteinander verbunden. Wie unschwer aus der Darstellung der Fig. 4B ersichtlich, sind der erste Verlängerungsabschnitt 32-1 und der zweite Verlängerungsabschnitt 32-2 im Wesentlichen orthogonal zueinander angeordnet. An den zweiten Verlängerungsabschnitt 32-2 kann sich ein weiterer gebogener Leitungsabschnitt 32-4 anschließen. Die Verlängerungsabschnitte können einstückig miteinander ausgebildet sein, so dass das Verlängerungsstück 32 ein integrales Bauteil ist. Alternativ können die Verlängerungsabschnitte auch zusammensteckbar sein, so dass das Verlängerungsstück 32 in einzelne Verlängerungsabschnitte zerlegt im bewohnbaren Fahrzeug mitgeführt werden kann.

In einem oberen Bereich des Verlängerungsstücks 32, beispielsweise im des zweiten Verlängerungsabschnitts 32-2 kann eine Befestigungseinrichtung 40 vorgesehen. Die Befestigungseinrichtung 40 dient insbesondere dazu, das Verlängerungsstück 32 an der Wand 14 des Fahrzeugs zu sichern. Die Befestigungseinrichtung 40 kann beispielsweise als Saugnapf ausgebildet sein, der an dem Verlängerungsstück 32 angebracht ist und dessen Saugseite mit der Wand 14 in Kontakt gebracht wird bzw. steht.

Es sind auch andere Arten von Befestigungseinrichtungen denkbar, insbesondere wird auch an Befestigungseinrichtungen gedacht, bei denen an dem Verlängerungsstück 32 und der Wand 14 komplementäre Befestigungselemente vorgesehen, durch die bei Bedarf eine formschlüssige oder/und kraftschlüssige Verbindung herstellbar ist. Beispielsweise könnte an der Wand 14 eine Art Öse oder Öffnung vorgesehen sein, in die ein am Verlängerungsstück 32 angebrachtes Hakenelement einhängbar ist. Weiter kann als Befestigungseinrichtung auch eine Rastverbindung in Frage kommen, beispielsweise mit einem von dem Verlängerungsstück 32 vorstehenden Rastelement, das mit einer an der Wand 14 vorgesehenen Rastöffnung lösbar in Eingriff gebracht werden kann.

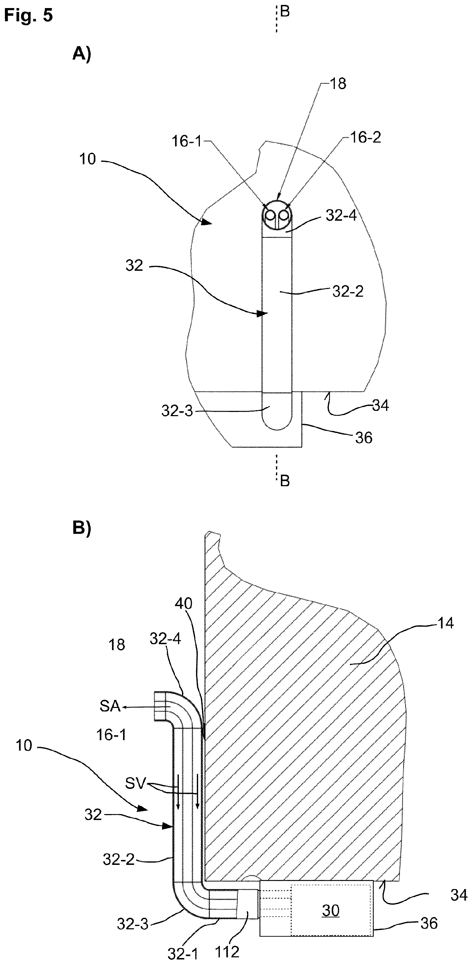

Fig. 5 zeigt in einer schematischen und vereinfachten Form wiederum eine endseitige Leitungsanordnung 10 für ein Heizgerät 30 (gestrichelt angedeutet) eines bewohnbaren Fahrzeugs. Die nachfolgende Beschreibung bezieht sich sowohl auf die Draufsicht (Fig. 5A), als auch auf die Schnittdarstellung (Fig. 5B). Die Leitungsanordnung 10 weist ein Verlängerungsstück 32 auf, das im gezeigten Beispiel entlang einer Wand 14 und einer Unterseite 34 angeordnet ist, beispielsweise einer Wand und einer Unterseite des bewohnbaren Fahrzeugs.

Das Verlängerungsstück 32 weist einen ersten Abgasrohrabschnitt 16-1 und einen zweiten Abgasrohrabschnitt 16-2 zum Ableiten von Abgasen auf. Die Abgasrohrabschnitte 16-1, 16-2 sind umgeben von einem Verbrennungsluftrohrabschnitt 18, der zum Zuleiten von Verbrennungsluft zu einem zugeordneten Brenner des Heizgeräts 30 dient. Die Abgasrohrabschnitte 16-1, 16-2 und der Verbrennungsrohrabschnitt 18 sind dabei relativ zueinander parallel und unbeweglich vorgesehen. In diesem Beispiel sind der erste Abgasrohrabschnitt 16-1 und der zweite Abgasrohrabschnitt 16-2 nebeneinander angeordnet und in dem Verbrennungsluftrohrabschnitt 18 aufgenommen.

In Bezug auf weitere Merkmale des Verlängerungsstücks 32 und dessen Anordnung wird auf die Beschreibung zur Figur 4 hingewiesen, die auch für das Beispiel der Fig. 5 anwendbar ist. Entsprechend sind in der Fig. 5 weitere Bezugszeichen aufgeführt, deren Beschreibung aber in Bezug auf die Fig. 4 vorgenommen worden ist.

Unter Bezugnahme auf die Figuren 1 bis 5 wird darauf hingewiesen, dass die verschiedenen Anordnungen von Abgasrohrabschnitten 16-1, 16-2 und Verbrennungsluftrohrabschnitten 18, wie etwa nebeneinander, übereinander, ineinander, konzentrisch, sowohl für die Leitungsendstücke 12, als auch für das Verlängerungsstück 32 umgesetzt werden können. Es kann also jede für ein Leitungsendstück 12 gezeigte Anordnung für ein Verlängerungsstück 32 umgesetzt werden oder umgekehrt. Dies gilt selbstredend auch für das in der Fig. 5 gezeigte Leitungsendstück 112.

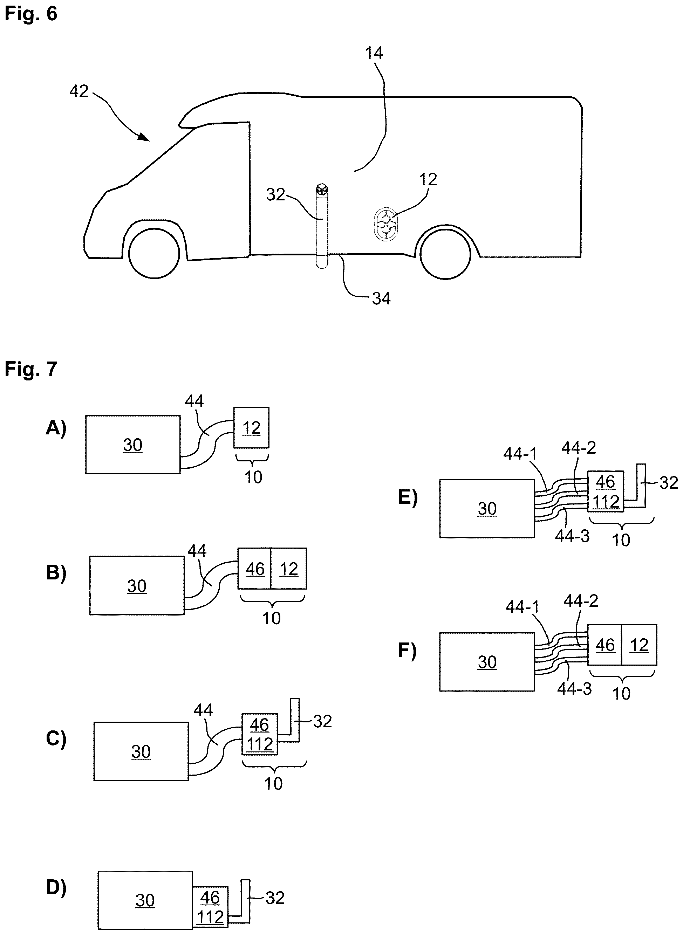

Fig. 6 zeigt in einer sehr stark vereinfachten und schematischen Darstellung ein bewohnbares Fahrzeug 42, hier ein Wohnmobil. In einer Seitenwand 14 des bewohnbaren Fahrzeugs 42 ist beispielhaft die Anordnung eines Leitungsendstücks 12 einer endseitigen Leitungsanordnung gezeigt. Das dargestellte Leitungsendstück 12 entspricht dem Beispiel der Fig. 2. Es können statt des Leitungsendstücks 12 der Fig. 2 auch andere Leitungsendstücke 12 an dem Fahrzeug 42 angeordnet sein, etwa diejenigen Leitungsendstücke der Fig. 1 und 3.

Ferner ist in Fig. 6 beispielshaft die Anordnung eines Verlängerungsstücks 32 der endseitigen Leitungsanordnung gezeigt. Dargestellt ist beispielhaft das Verlängerungsstück 32 der Fig. 5 mit zwei Abgasrohrabschnitten. Wie bereits unter Bezugnahme auf die Fig. 4 und 5 erläutern worden ist, ist das Verlngerungsstück 32 mit einem unterflur angeordneten Heizgerät verbunden bzw. verbindbar, das an einer Unterseite 34 des Fahrzeugs 42 bzw. des Fahrzeugaufbaus vorgesehen ist. Selbstverständlich kann auch das Verlängerungsstück 32 gemäß Fig. 4 an einem Fahrzeug 42 vorgesehen sein.

Auch wenn das Leitungsendstück 12 und das Verlängerungsstück 32 in der Fig. 6 gemeinsam an dem Fahrzeug 42 dargestellt ist, wird darauf hingewiesen, dass üblicherweise nicht beide an dem gleichen Fahrzeug vorgesehen sind. Ferner wird darauf hingewiesen, dass das Leitungsendstück 12 und das Verlängerungsstück in Relation zu dem Fahrzeug 42 nicht maßstabsgetreu dargestellt sind. Vielmehr sind sie zum Zwecke der besseren Verständlichkeit vergrößert gezeichnet.

Fig. 7 zeigt in den Teilfiguren A) bis F) rein schematisch verschiedene Ausgestaltungen bzw. Konfigurationen einer endseitigen Leitungsanordnung 10 in Bezug auf ein zugeordnetes Heizgerät 30.

Gemäß Fig. 7A ist das Leitungsendstück 12 (siehe Fig. 1 bis 3) mittels flexibler Rohre 44 mit dem Heizgerät 30 verbunden. Die flexiblen Rohre 44 sind dabei so geführt, dass ein entsprechender Anschluss an die Abgasrohrabschnitte 16-1, 16-2 und den Verbrennungsluftrohrabschnitt 18 in dem Leitungsendstück 12 ermöglicht werden kann. Im Beispiel der Fig. 7A) kann beispielsweise das Leitungsendstück 12 gemäß Figuren 2 und 3 eingesetzt sein. Bei einer derartigen Konfiguration weist die endseitige Leitungsanordnung nur das Leitungsendstück 12 auf.

Gemäß Fig. 7B ist an dem Leitungsendstück 12 ein Leitungsadapter 46 angebracht, der dann mit den flexiblen Rohren 44 verbunden ist. Der Leitungsadapter 46 ist dabei insbesondere so ausgeführt, dass das Leitungsendstück 12 auf den Leitungsadapter aufgesteckt werden kann. Bei einer derartigen Konfiguration weist die endseitige Leitungsanordnung 10 den Leitungsadapter 46 und das Leitungsendstück 12 auf. Das Aufstecken ist dabei ein Beispiel für ein Schnellbefestigungssystem. Eine Alternative umfasst beispielsweise ein Bajonettsystem.

Gemäß Fig. 7C ist ein Verlängerungsstück 32 (Fig. 4 und 5) mittels eines Leitungsadapters 46 an flexiblen Rohren 44 angebracht. Der hier dargestellte Leitungsadapter kann auch als Leitungsendstück 112 im Sinne der Fig. 5 ausgebildet sein bzw. verstanden werden. Bei einer derartigen Konfiguration weist die endseitige Leitungsanordnung 10 den Leitungsadapter 46 bzw. das Leitungsendstück 112 und das Verlängerungsstück 32 auf.

Gemäß Fig. 7D ist auch eine Konfiguration denkbar, bei der ein Leitungsadapter 46 unmittelbar an dem Heizgerät angebracht ist und das Verlängerungsstück 32 an dem Leitungsadapter 46 vorgesehen ist. Wie beim Beispiel der Fig. 7C kann der Leitungsadapter 46 auch als Leitungsendstück im Sinne der Fig. 5 ausgebildet sein. Bei einer derartigen Konfiguration weist die endseitige Leitungsanordnung 10 den Leitungsadapter 46 bzw. das Leitungsendstück 112 und das Verlängerungsstück 32 auf.

Gemäß Fig. 7E und 7F können mit einem Heizgerät 30 verbundene einzelne Leitungen 44-1, 44-2, 44-3 mit einem Leitungsadapter 46 verbunden sein. Der Leitungsadapter kann dann mit einem Leitungsendstück 12 (Fig. 7F) oder einem Verlängerungsstück 32 (Fig. 7E) verbunden werden. Dabei ist der Leitungsadapter 46 so ausgestaltet, dass die heizgerätseitigen einzelnen Leitungen 44-1, 44-2, 44-3 strömungstechnisch so zusammengeführt werden, dass endseitig an dem Leitungsadapter 46 das Leitungsendstück 12 bzw. das Verlängerungsstück 32 mit den in den Fig. 1 bis 5 dargestellten Anordnungen von Abgasrohrabschnitten 16-1, 16-2 und Verbrennungsluftabschnitten 18 angeschlossen werden können. Bei einer Konfiguration gemäß Fig. 7E weist die endseitige Leitungsanordnung 10 den Adapter 46 bzw. das Leitungsendstück 112 und das Verlängerungsstück 32 auf. Bei einer Konfiguration gemäß Fig. 7F weist die endseitige Leitungsanordnung 10 den Adapter 46 und das Leitungsendstück 12 auf.

## Patentansprüche

1. Bewohnbares Fahrzeug (42), insbesondere Wohnwagen, Wohnmobil oder Schiff, mit einem Heizungssystem mit einem Heizgerät (30) zum Erwärmen von Luft im Innenraum des Fahrzeugs oder/und zum Erwärmen von Wasser,
wobei das Heizgerät (30) zum Ableiten von Abgasen eines Brenners oder mehrerer Brenner und zum Zuleiten von Verbrennungsluft zu dem Brenner oder zu den Brennern eine endseitige Leitungsanordnung (10) aufweist; und
wobei die endseitige Leitungsanordnung (10) wenigstens einen Abgasrohrabschnitt (16-1, 16-2) zum Ableiten von Abgasen eines zugeordneten Brenners des Heizgerätes (30) und wenigstens einen Verbrennungsluftrohrabschnitt (18) zum Zuleiten von Verbrennungsluft zu einem zugeordneten Brenner des Heizgeräts (30) aufweist;
**dadurch gekennzeichnet, dass**
der Abgasrohrabschnitt (16-1, 16-2) und der Verbrennungsrohrabschnitt (18) relativ zueinander parallel und unbeweglich in einem Hülsenabschnitt (20) vorgesehen sind, dessen Außenseite (22) die Leitungsanordnung (10) zur Umgebung hin begrenzt;
das Heizgerät (30) in einem vom Innenraum durch eine Abdeckeinrichtung getrennten Kompartiment (36) aufgenommen ist, wobei das Kompartiment (36) als Unterflurkompartiment unterhalb des Bodens (34) des Innenraums ausgebildet ist;
die Leitungsanordnung (10) vollständig außerhalb des Innenraums des Fahrzeugs (42) angeordnet ist;
die Leitungsanordnung (10) ein Leitungsendstück (12) umfasst, das auf seiner dem Heizgerät (30) abgewandten Seite eine Mündung für den Abgasrohrabschnitt (16-1, 16-2) und den Verbrennungsluftrohrabschnitt (18) bildet;
die Leitungsanordnung (10) ein Verlängerungsstück (32) umfasst, das wenigstens einen gebogenen Leitungsabschnitt (32-3) aufweist, der zwischen einem ersten Verlängerungsabschnitt (32-1) und einem zweiten Verlängerungsabschnitt (32-2) angeordnet ist, wobei der erste Verlängerungsabschnitt (32-1) bezogen auf die Strömungsrichtung (SA) von Abgas stromaufwärts des gebogenen Leitungsabschnitts (32-3) angeordnet ist; und dass
die Leitungsanordnung (10) einen mit dem Heizgerät (30) unmittelbar oder mittelbar verbundenen Leitungsadapter (46, 112) umfasst, an dem das Leitungsendstück (12) oder das Verlängerungsstück (32) abnehmbar angebracht ist, insbesondere in der Art einer Steckverbindung.

2. Bewohnbares Fahrzeug nach Anspruch 1, wobei die Leitungsanordnung (10) wenigstens zwei Abgasrohrabschnitte (16-1, 16-2) aufweist, die strömungstechnisch voneinander getrennt sind.

3. Bewohnbares Fahrzeug nach einem der vorhergehenden Ansprüche, wobei das Verlängerungsstück (32) eine Befestigungseinrichtung (40) aufweist, derart dass das Verlängerungsstück (32), insbesondere der zweite Verlängerungsabschnitt (32-2), an einer Wand (14) des bewohnbaren Fahrzeugs (42) fixierbar ist.

4. Bewohnbares Fahrzeug nach Anspruch 3, wobei das Verlängerungsstück (32) einen ersten gebogenen Leitungsabschnitt (32-3) aufweist, der zwischen dem ersten Verlängerungsabschnitt (32-1) und dem zweiten Verlängerungsabschnitt (32-2) angeordnet ist, und einen zweiten gebogenen Leitungsabschnitt (32-4) aufweist, der bezogen auf die Strömungsrichtung (SA) von Abgas stromabwärts an dem zweiten Verlängerungsabschnitt (32-2) angeordnet ist.

5. Bewohnbares Fahrzeug nach einem der vorhergehenden Ansprüche, wobei der erste Verlängerungsabschnitt (32-1) und der zweite Verlängerungsabschnitt (32-2) im Wesentlichen orthogonal zueinander ausgerichtet sind.

6. Bewohnbares Fahrzeug nach Anspruch 1, wobei das Leitungsendstück (12) bezogen auf die Strömungsrichtung (SA) von Abgas stromabwärts des zweiten Verlängerungsabschnitts (32-2) an dem Verlängerungsstück (32) anbringbar ist.

7. Bewohnbares Fahrzeug nach einem der Ansprüche 1 bis 6, wobei strömungstechnisch zwischen dem Heizgerät (30) und der endseitigen Leitungsanordnung (10) wenigstens ein flexibler Abgasrohrabschnitt (44) und wenigsten ein flexibler Verbrennungsluftrohrabschnitt (44) angeordnet sind.

## Claims

1. A vehicle (42) fit for habitation, in particular, a caravan, motor home or ship, comprising a heating system with a heating device (30) for heating air inside the vehicle and/or for heating water,
wherein the heating device (30) includes an end line assembly (10) for discharging exhaust gases of a burner or of a plurality of burners and for feeding combustion air to the burner or to the burners; and
wherein the end line assembly (10) includes at least one exhaust gas pipe section (16-1, 16-2) for discharging exhaust gases of an associated burner of the heating device (30) and at least one combustion air pipe section (18) for feeding combustion air to an associated burner of the heating device (30);
**characterized in that**
the exhaust gas pipe section (16-1, 16-2) and the combustion air pipe section (18) are provided relatively parallel to one another and immovable in a sleeve section (20), the outside (22) of which delimits the line assembly (10) from the surroundings;
the heating device (30) is accommodated within a compartment (36) separated from the interior by a covering means, wherein the compartment (36) is designed as an underfloor compartment underneath the floor (34) of the interior;
the line assembly (10) is arranged completely outside the interior of the vehicle (42);
the line assembly (10) includes a line end piece (12), which, on its side facing away from the heating device (30), forms an outlet for the exhaust gas pipe section (16-1, 16-2) and the combustion air pipe section (18);
the line assembly (10) includes an extension piece (32), which includes at least one bent line section (32-3), which is arranged between a first extension section (32-1) and a second extension section (32-2), wherein the first extension section (32-1) is, related to the direction of flow (SA) of exhaust gas, arranged upstream of the bent line section (32-3); and that
the line assembly (10) includes a line adapter (46, 112) directly or indirectly connected to the heating device (30), on which the line end piece (12) or the extension piece (32) is removably mounted, especially in the style of a plug connection.

2. The vehicle fit for habitation according to claim 1, wherein the line assembly (10) includes at least two exhaust gas pipe sections (16-1, 16-2), which are separated fluidically from one another.

3. The vehicle fit for habitation according to any one of the preceding claims, wherein the extension piece (32) includes a fastening means (40) in such a manner that the extension piece (32), in particular, the second extension section (32-2), can be fixed on a wall (14) of the vehicle (42) fit for habitation.

4. The vehicle fit for habitation according to claim 3, wherein the extension piece (32) includes a first bent line section (32-3), which is arranged between the first extension section (32-1) and the second extension section (32-2), and a second bent line section (32-4) which is, related to the direction of flow (SA) of exhaust gas, arranged downstream on the second extension section (32-2).

5. The vehicle fit for habitation according to any one of the preceding claims, wherein the first extension section (32-1) and the second extension section (32-2) are aligned essentially orthogonally to one another.

6. The vehicle fit for habitation according to claim 1, wherein the line end piece (12) can, related to the direction of flow (SA) of exhaust gas, be mounted on the extension piece (32) downstream of the second extension section (32-2).

7. The vehicle fit for habitation according to any one of claims 1 to 6, wherein at least one flexible exhaust gas pipe section (44) and at least one flexible combustion air pipe section (44) are arranged fluidically between the heating device (30) and the end line assembly (10).

## Revendications

1. Véhicule habitable (42), en particulier caravane, camping-car ou bateau, comprenant un système de chauffage comprenant un appareil de chauffage (30) pour chauffer de l'air dans l'habitacle du véhicule ou/et pour chauffer de l'eau,
dans lequel l'appareil de chauffage (30) comporte pour évacuer les effluents gazeux d'un brûleur ou de plusieurs brûleurs et pour amener de l'air de combustion au brûleur ou aux brûleurs un dispositif de conduit terminal (10) ; et
dans lequel le dispositif de conduit terminal (10) comporte au moins une section de tuyau à effluents gazeux (16-1, 16-2) pour évacuer les effluents gazeux d'un brûleur associé de l'appareil de chauffage (30) et au moins une section de tuyau à air de combustion (18) pour amener de l'air de combustion à un brûleur associé de l'appareil de chauffage (30) ;
**caractérisé en ce que**
la section de tuyau à effluents gazeux (16-1, 16-2) et la section de tuyau à air de combustion (18) sont prévues parallèlement l'une par rapport à l'autre et de manière fixe dans une section de manchon (20) dont l'extérieur (22) limite le dispositif de conduit (10) par rapport à l'environnement ;
l'appareil de chauffage (30) est logé dans un compartiment (36) séparé de l'habitacle par un dispositif de recouvrement, dans lequel le compartiment (36) est conformé en un compartiment enfoui au-dessous du plancher (34) de l'habitacle ;
le dispositif de conduit (10) est disposé entièrement à l'extérieur de l'habitacle du véhicule (42) ;
le dispositif de conduit (10) comprend une pièce d'extrémité de conduit (12), qui forme du côté opposé à l'appareil de chauffage (30) un débouché pour la section de tuyau à effluents gazeux (16-1, 16-2) et la section de tuyau à air de combustion (18) ;
le dispositif de conduit (10) comprend une allonge (32), qui comporte au moins une section de conduit courbe (32-3), qui est disposée entre une première section d'allonge (32-1) et une deuxième section d'allonge (32-2), dans lequel la première section d'allonge (32-1) est disposée en amont de la section de conduit courbe (32-3) par rapport à la direction d'écoulement (SA) des effluents gazeux ; et que
le dispositif de conduit (10) comprend un adaptateur de conduit (46, 112), relié directement ou indirectement à l'appareil de chauffage (30), sur lequel la pièce d'extrémité de conduit (12) ou l'allonge (32) est montée de manière amovible, en particulier à la manière d'un raccord à emboîtement.

2. Véhicule habitable selon la revendication 1, dans lequel le dispositif de conduit (10) comporte au moins deux sections de tuyau à effluents gazeux (16-1, 16-2) qui sont séparées l'une de l'autre en termes de technique d'écoulement.

3. Véhicule habitable selon l'une des revendications précédentes, dans lequel l'allonge (32) comporte un dispositif de fixation (40), de telle sorte que l'allonge (32), en particulier la deuxième section d'allonge (32-2), puisse être fixée à une paroi (14) du véhicule habitable (42).

4. Véhicule habitable selon la revendication 3, dans lequel l'allonge (32) comporte une première section de conduit courbe (32-3), qui est disposée entre la première section d'allonge (32-1) et la deuxième section d'allonge (32-2), et une deuxième section de conduit courbe (32-4), qui est disposée sur la deuxième section d'allonge (32-2), en aval par rapport à la direction d'écoulement (SA) des effluents gazeux.

5. Véhicule habitable selon l'une des revendications précédentes, dans lequel la première section d'allonge (32-1) et la deuxième section d'allonge (32-2) sont orientées sensiblement orthogonalement l'une par rapport à l'autre.

6. Véhicule habitable selon la revendication 1, dans lequel la pièce d'extrémité de conduit (12) est apte à être montée sur l'allonge (32), en aval de la deuxième section d'allonge (32-2) par rapport à la direction d'écoulement (SA) des effluents gazeux.

7. Véhicule habitable selon l'une des revendications 1 à 6, dans lequel il est prévu entre l'appareil de chauffage (30) et le dispositif de conduit terminal (10) en termes de technique d'écoulement au moins une section à effluents gazeux flexible (44) et au moins une section de tuyau à air de combustion flexible (44).
